# EUROPÄISCHE PATENTANMELDUNG

(11) **EP 4 170 684 A1**
(43) Veröffentlichungstag der Anmeldung: **26.04.2023**
(21) Anmeldenummer: 22197791.1
(22) Anmeldetag: 26.09.2022
(51) Int. Cl.: H01B 7/32, H01B 7/36, H01B 7/18

(54) **KABEL MIT HAPTISCH ERTASTBAREM VERDREHINDIKATOR UND VERFAHREN ZUR TORSIONSFREIEN VERLEGUNG EINES SOLCHEN KABELS**

(30) Priorität: 22.10.2021 DE 102021127570
(71) Anmelder: Kromberg & Schubert GmbH Cable & Wire, 46414 Rhede (DE)
(72) Erfinder: GREINER, Martin, 30966 Hemmingen (DE); BREMER, Anne, 46414 Rhede (DE)
(74) Vertreter: Staeger & Sperling Partnerschaftsgesellschaft mbB

(57) **Zusammenfassung**

Die Erfindung betrifft ein Kabel (1) mit haptisch ertastbarem Verdrehindikator (12), wobei das Kabel (1) zumindest eine Ader (10) zur Signalübertragung und einen die zumindest eine Ader (10) umgebenden Kabelmantel (11) aufweist, wobei das Kabel (1) genau einen haptisch ertastbaren Verdrehindikator (12) aufweist, welcher sich entlang einer Längsrichtung (L) des Kabels (1) über eine im Wesentlichen gesamte Länge des Kabelmantels (11) erstreckt und über die im Wesentlichen gesamte Länge des Kabelmantels (11) eine vorbestimmte Orientierung zu der zumindest einen Ader (10) aufweist.

## Beschreibung

Die Erfindung betrifft ein Kabel mit haptisch ertastbarem Verdrehindikator und Verfahren zur torsionsfreien Verlegung eines solchen Kabels.

Aus dem Stand der Technik ist eine Vielzahl von Kabeln für verschiedenste Anwendungen mit unterschiedlichen Querschnitten bekannt. Teilweise ist es jedoch bei Kabeln und insbesondere bei Kabeln für Sensoren notwendig, diese möglichst frei von einer Torsion des Kabels bereitstellen zu können.

Beispielsweise bei Kabeln mit optischen Leitern aber auch bei Kabeln mit elektrisch leitfähigen Adern ist es für eine möglichst fehlerfreie Datenübertragung und teilweise auch für eine möglichst fehlerfreie Erfassung von Sensordaten notwendig, dass diese nicht in Umfangsrichtung tordiert bzw. verdreht verlegt werden und weiter vorzugsweise auch vor dem Verlegen nicht unzulässig stark in Umfangsrichtung tordiert wurden.

Der Stand der Technik sieht hierfür farbige Markierungslinien entlang der Kabel vor, durch welche optisch überprüft werden kann, ob das Kabel entlang einer vorbestimmten Verlegestrecke bzw. entlang eines vorbestimmten Kabelpfades verdreht ist.

Vereinfacht darf dieser geradlinig und ausschließlich in Längsrichtung auf dem Kabelmantel verlaufender Farbstreifen bei einer optischen Kontrolle nicht in Umfangsrichtung um das Kabel bzw. um den Kabelmantel herumlauffen, da das Kabel bzw. die Adern im Inneren des Kabels ansonsten verdreht sind.

Sowohl bei einer manuellen als auch bei einer automatisierten Montage ergibt sich dabei das Problem, dass die optische Kontrolle stark von den Lichtverhältnissen in der Umgebung sowie von der Sauberkeit bzw. einer Verschmutzung des Kabels abhängig ist. Ist das Kabel verschmutzt oder ist es vergleichsweise Dunkel, kann die optische Markierung d.h. der Farbstreifen oftmals nicht mehr oder zumindest nicht mehr zuverlässig erfasst werden.

Der Erfindung liegt deshalb die Aufgabe zugrunde, die vorgenannten Nachteile zu überwinden und ein Kabel bereitzustellen, welches in einfacherweise Torsions- bzw. Verdrehungsfrei verlegt werden kann.

Diese Aufgabe wird durch die Merkmalskombination gemäß Patentanspruch 1 gelöst.

Erfindungsgemäß wird daher ein Kabel mit haptisch ertastbarem bzw. erfassbaren Verdrehindikator vorgeschlagen, wobei eine Erfassung sowohl manuell z.B. durch eine Person als auch automatisiert z.B. mittels eines Sensors erfolgen kann. Das Kabel weist zumindest eine Ader zur Signalübertragung und einen die zumindest eine Ader umgebenden Kabelmantel auf. Weiter weist das Kabel genau einen haptisch ertastbaren Verdrehindikator auf, welcher auch als Mittel zur Erkennung einer Verdrehung und/oder Torsion des Kabels bezeichnet werden kann. Der Verdrehindikator erstreckt sich entlang einer Längsrichtung des Kabels über eine im Wesentlichen gesamte Länge des Kabelmantels und weist über die im Wesentlichen gesamte Länge des Kabelmantels eine vorbestimmte und insbesondere gleichbleibende Orientierung bzw. einen vorbestimmten Verlauf zu der zumindest einen Ader auf. Sind mehrere Adern vorgesehen, weist der Verdrehindikator seine vorbestimmte Orientierung zu allen Adern bzw. alle Adern eine vorbestimmte Orientierung zu dem Verdrehindikator auf.

Anhand der Lage bzw. des Verlaufs des Verdrehindikators über die Länge des Kabels kann so auf die Lage der Adern geschlossen werden. Umläuft der Verdrehindikator den Kabelmantel in Umfangsrichtung, ist auch die Ader bzw. sind auch die Adern gegenüber ihrer Solllage in Umfangsrichtung verdreht bzw. tordiert.

Verläuft der Verdrehindikator jedoch geradlinig und ohne einen Anteil oder nur einem in Umfangsrichtung geringen Anteil, ist auch die Ader bzw. sind auch die Adern unverdreht und in ihrer Solllage.

Dabei kann der Kabelmantel unmittelbar die Ader bzw. die Adern oder einen Adermantel der Adern umschließen. Alternativ kann die Ader bzw. können die Adern auch mit einem Innenmantel und/oder einer Schirmung ummantelt sein, wobei der Kabelmantel und die Adern vorzugsweise fest und insbesondere derart verbunden sind, dass eine Torsion des Kabelmantels eine Torsion der Adern hervorruft.

Als die im Wesentlichen gesamte Länge des Kabelmantels kann auch die gesamte Länge des Kabelmantels oder zumindest über 90% der Länge des Kabelmantels verstanden werden.

Gemäß einer vorteilhaften Weiterbildung, ist der Verdrehindikator ein in Radialrichtung des Kabelmantels über den Kabelmantel hervorstehender Vorsprung oder eine nutartige Vertiefung in dem Kabelmantel.

Weiter kann der Verdrehindikator ein in Radialrichtung des Kabelmantels über den Kabelmantel hervorstehender Vorsprung sein, in welchem keine Ader und insbesondere keine Ader zur Signalübertragung angeordnet ist. Der Vorsprung kann hierbei auch als Nase bezeichnet werden und frei von einer Ader sein. Entsprechend kann der Vorsprung aus Vollmaterial gebildet sein.

Vorzugsweise sind der Verdrehindikator und der Kabelmantel einstückig und integral miteinander ausgebildet.

Der Verdrehindikator und der Kabelmantel können gemäß einer vorteilhaften Weiterbildung in einem gemeinsamen Extrusionsprozess ausgebildet bzw. gemeinsam extrudiert sein, in welchem die zumindest eine Ader mit dem Kabelmantel umspritzt wird.

Der Verdrehindikator ist in einem Querschnitt des Kabels vorzugsweise an genau einer Seite des Kabelmantels und in Umfangsrichtung um den Kabelmantel an einer vorbestimmten Position ausgebildet.

Weiter ist dabei vorteilhaft, wenn der Verdrehindikator an jedem Querschnitt des Kabels in Umfangsrichtung um den Kabelmantel an genau derselben Position ausgebildet ist.

Als Umfangsrichtung wird dabei die Umfangrichtung um eine Kabelachse bzw. um die Kabellängsrichtung verstanden, wobei sich auch die Radialrichtung auf die Kabelachse bzw. die Kabellängsrichtung bezieht.

Zusätzlich zu der haptischen Erfassbarkeit sieht eine Variante vor, dass der Verdrehindikator eine sich von dem Kabelmantel unterscheidende Farbe aufweist, sodass der haptisch ertastbare Verdrehindikator zusätzlich optisch erfassbar ist.

Die Ader kann eine elektrische oder optische Signale leitende Ader und entsprechend ein elektrischer oder optischer Leiter sein. Grundsätzlich kann jede Ader aus einer einzigen oder einer Vielzahl von Litzen gebildet sein.

Bei dem Kabel kann es sich um ein Rundkabel oder um ein Flachkabel handeln.

Um nicht nur erkennen zu können, ob das Kabel verdreht verlegt wurde, sondern zusätzlich auch, ob das Kabel beim Verlegen oder zuvor oder aber nach dem Verlegen unzulässig stark verdreht bzw. tordiert wurde, sieht eine weitere vorteilhafte Variante vor, dass in oder an dem Verdrehindikator und insbesondere über die im Wesentlichen gesamte Länge des Kabelmantels ein kraftsensitives und insbesondere mechanophores Element angeordnet ist, welches ausgebildet ist, seine optische Erscheinung oder seine physikalischen Eigenschaften bei Wirken einer zu der Längsrichtung orthogonalen und eine Grenzkraft übersteigende Querkraft und/oder einer in Umfangsrichtung wirkenden Torsionskraft zu ändern. Beispielsweise kann ein in Umfangsrichtung sprödes Element vorgesehen sein, welches bei einer Torsion bzw. Verdrehung des Kabels in Umfangsrichtung bricht oder sich von dem Verdrehindikator löst. Alternativ kann der Verdrehindikator jedoch auch eine mechanophore Farbe bzw. ein mechanophores Element aufweisen, welches sich bei einer unzulässigen Torsion bzw. Verdrehung, bei welcher die Grenzkraft überschritten wird, verfärbt. Alternativ kann das Element auch einen farbigen Bereich des Verdrehindikators abdecken, welcher nur durch ein lösen des Elements von dem Verdrehindikator sichtbar wird und dadurch eine unzulässig starke Torsion anzeigt.

Die zumindest eine Ader kann zudem einen runden Querschnitt aufweisen. Alternativ kann jedoch auch vorgesehen sein, dass die zumindest eine Ader einen flachen und insbesondere rechteckigen Querschnitt aufweist. Als flach wird dabei verstanden, dass die Ader im Querschnitt in eine erste (Quer-) Richtung eine größere Erstreckung aufweist, als in eine zu der ersten Richtung orthogonalen zweiten (Dicken-) Richtung. Weiter kann vorzugsweise vorgesehen sein, dass das Kabel eine Vielzahl von Adern aufweist, welche einen flachen und insbesondere rechteckigen Querschnitt aufweisen und welche im Querschnitt des Kabels aufeinander gestapelt sind bzw. in Radialrichtung zu der Mittelachse des Kabels unmittelbar aneinander anliegen.

Beispielsweise kann das Kabel eine flache und insbesondere rechteckige Ader aufweisen oder einen Stapel von mehreren flachen und insbesondere rechteckigen Adern, welche jeweils als metallische Lage bezeichnet werden können.

Die Adern können einzeln und/oder gemeinsam in Umfangsrichtung des Kabels isoliert sein. Insbesondere können die Adern auch unmittelbar elektrisch leitfähig aneinander anliegen und vorzugweise aufeinander laminiert sein, sodass sie gemeinsam einen in eine Richtung gut verformbaren Leiter bilden.

Solch eine flache Ader kann jeweils aus einer Vielzahl von einzelnen Litzen bzw. Drähten, beispielsweise auch in Form eines Drahtgeflechts, oder aber aus jeweils einem einzelnen Blech oder Blechband gebildet sein.

Weiter kann ein Endabschnitt des Kabels in Längsrichtung des Kabels bei einer vorteilhaften Weiterbildung einen Kodierabschnitt mit dem Verdrehindikator als Kodierelement für ein Kabelabschlusselement bilden. Bei dem Kabelabschlusselement kann es sich beispielsweise um einen Stecker- oder Buchsenkörper handeln, dessen Kontaktelemente mit den Adern kontaktiert werden können. Dabei ist das Kabel durch den Verdrehindikator ausgebildet, nur in einer vorbestimmten Stellung mit dem Kabelabschlusselement fügbar zu sein. Beispielsweise weist das Kabelabschlusselement hierzu eine Aufnahme auf, deren Querschnittsform zu dem Kabelquerschnitt und insbesondere dem Querschnitt des Verdrehindikators korrespondiert. Dadurch kann das Kabelabschlusselement nur in einer vorbestimmten Stellung auf das Kabel aufgeschoben werden. Da die Adern des Kabels eine vorbestimmte Orientierung zu dem Verdrehindikator aufweisen, weisen die Adern mithin auch eine vorbestimmte Orientierung zu dem Kabelabschlusselement sowie vorzugsweise zu den Kontaktelementen des Kabelabschlusselements auf, sodass der Verdrehindikator zugleich als Montagehilfe dient.

Ein weiterer Aspekt der Erfindung betrifft ein Verfahren zum verdrehungsfreiem bzw. torsionsfreiem Verlegen eines erfindungsgemäßen Kabels entlang eines vorbestimmten Kabel- bzw. Verlegepfades. Dabei wird das Kabel entlang des vorbestimmten Kabelpfades angeordnet und während des Anordnens mit dem Verdrehindikator in einer vorbestimmten Orientierung gehalten. Anschließend wird das Kabel nach dem Anordnen entlang des vorbestimmten Kabelpfades durch optisches und/oder haptisches Erfassen des Verdrehindikators auf eine unzulässige Verdrehung des Kabels in Umfangsrichtung geprüft.

Für das Anordnen des Kabels kann zudem eine Verlegehilfe genutzt werden, welche eine zu dem Kabelquerschnitt und dem Verdrehindikator korrespondierende Öffnung vorsieht und somit eine Schablone bildet. Durch den Verdrehindikator kann das Kabel die Verlegehilfe bzw. die Öffnung nur in der vorbestimmten Orientierung verlaufen, sodass das Kabel bereits beim Verlegen unverdreht entlang dem Kabelpfad angeordnet werden kann.

Auch nach dem Verlegen ist eine vergleichsweise einfache haptische Kontrolle möglich, welche sowohl automatisiert als auch manuell erfolgen kann und beleuchtungs- und größtenteils auch verschmutzungsunabhängig ist.

Durch den Verdrehindikator wir auch insbesondere ein vereinfachtes automatisiertes Verlegen mittels eines Roboters oder einer Verlegemaschine möglich, da das Kabel mechanisch mittels des Verdrehindikators geführt werden kann.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1a, b: je ein Kabel mit einer ersten Variante eines Verdrehindikators im Querschnitt;
- Fig. 2a, b: je ein Kabel mit einer zweiten Variante eines Verdrehindikators im Querschnitt;
- Fig. 3a, b: je ein Kabel mit einer dritten Variante eines Verdrehindikators im Querschnitt;
- Fig. 4: ein Kabel in einer Aufsicht.

Die Figuren sind beispielhaft schematisch. Gleiche Bezugszeichen in den Figuren weisen auf gleiche funktionale und/oder strukturelle Merkmale hin.

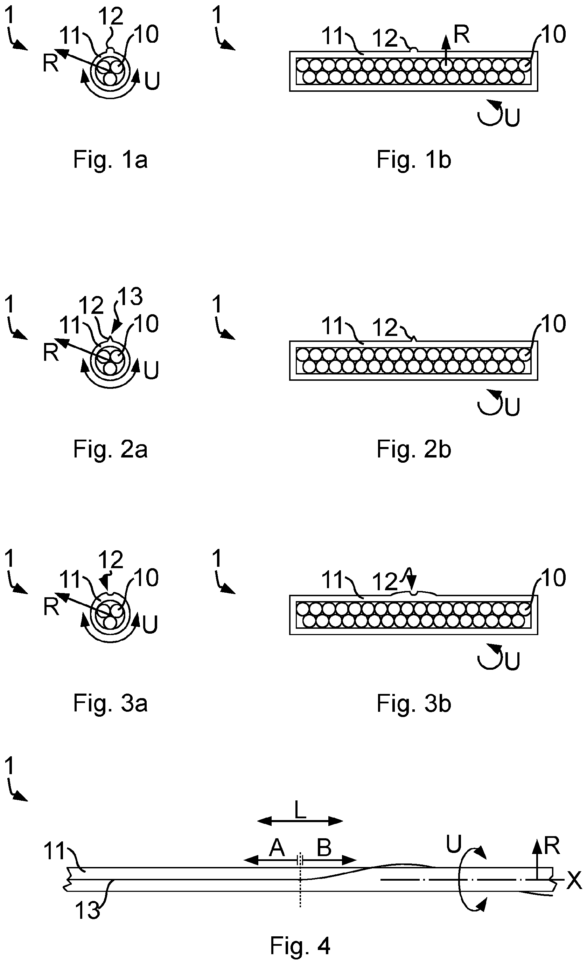

In den Figuren 1 bis 3 ist jeweils ein Kabel 1 im Querschnitt mit einer Variante eines Verdrehindikators 12 dargestellt, wobei in der jeweiligen Figur 1a, 2a, 3a ein Rundkabel und in der jeweiligen Figur 1b, 2b, 3b ein Flachkabel abgebildet ist.

Die Kabel 1 weisen jeweils mehrere Adern 10 auf, wobei die abgebildeten Anzahlen von Adern 10 rein beispielhaft sind. Weiter sind die Adern 10 in Umfangsrichtung U mit dem Kabelmantel 11 ummantelt, welcher auch vollständig an den Außenflächen der Adern 10 anliegen kann.

In den Figuren 1a und 1b ist jeweils ein im Querschnitt teilkreisförmiger vorspringender Verdrehindikator 12 vorgesehen, welcher auch als Nase bezeichnet werden kann und in Radialrichtung R über den Kabelmantel 11 hervorsteht und dadurch für einen Sensor oder einen Menschen erstartbar also haptisch erfassbar ist.

Auch bei einem Flachkabel 1, wie es in den Figuren 1b, 2b und 3b dargestellt ist, bezieht sich die Radialrichtung R und die Umfangsrichtdung U auf eine jeweilige Mittel- bzw. Längsachse X des Kabels 1.

Bei den Figuren 2a und 2b ist der Verdrehindikator 12 jeweils im Querschnitt dreieckig ausgebildet, wobei eine Spitze 13 des dreieckigen Verdrehindikators 12 über die Längsrichtung des Kabels eine Kante bildet, welches sehr gut optisch erfassbar und haptisch ertastbar ist.

Alternativ zu den als Vorsprüngen ausgebildeten Verdrehindikatoren 12 der Varianten gemäß der Figuren 1a bis 2b kann der Verdrehindikator 12 auch als nutartige Vertiefung vorgesehen sein, wie es in den Figuren 3a und 3b dargestellt ist. Dabei ist der Bereich des Kabelmantels 11 unmittelbar angrenzend an die nutartige Vertiefung bzw. angrenzend an den Verdrehindikator 12 vorzugsweise dicker ausgebildet als angrenzende Bereiche des Kabelmantels 11, sodass eine für eine ausreichende Isolation erforderliche minimale Dicke des Kabelmantels 11 nicht unterschritten wird. Entsprechend bildet der Verdrehindikator 12 einen Rücksprung gegenüber der Oberfläche des Kabelmantels 11 aus, welcher jedoch ebenfalls haptisch gut erfassbar ist. Hinzukommt, dass ein als Vertiefung ausgebildeter Verdrehindikator 12 im Vergleich zu einem als Vorsprung ausgebildeter Verdrehindikator 12 besser gegen unbeabsichtigtes Abscheren oder Abtrennen geschützt ist.

Bei den Flachkabeln gemäß den Figuren 1b, 2b und 3b ist der Verdrehindikator 12 im Schnitt jeweils mittig einer langen Seite des im Wesentlichen rechteckigen Kabelmantels 11 angeordnet, wobei der Verdrehindikator 12 alternativ auch an einer kurzen Seite des Kabelmantels 11 und auch außermittig angeordnet sein kann.

In Figur 4 ist ein Kabel 1 in einer Aufsicht bzw. einer Ansicht von oben gezeigt, wobei das Kabel 1 beispielhaft einen Verdrehindikator 12 gemäß der in Figur 2a gezeigten Variante aufweist und entlang seiner Längsrichtung L einen ersten Bereich A sowie einen zweiten Bereich B aufweist. Vereinfacht ist der Verdrehindikator 12 lediglich durch den Verlauf seiner Spitze 13 bzw. die durch die Spitze 13 gebildete Kante dargestellt.

In dem ersten Abschnitt A verläuft die Spitze 13 bzw. die Kante des Verdrehindikators 12 geradlinig und ohne eine Torsion in Umfangsrichtung U. Da der Verdrehindikator 12 eine vorbestimmte Orientierung gegenüber den Adern 10 aufweist, sind die Adern 10 innerhalb des Kabelmantels 11 ebenfalls nicht verdreht bzw. tordiert und verlaufen geradlinig.

In dem zweiten Abschnitt B verläuft die Spitze 13 bzw. die Kante des Verdrehindikators 12 tordiert bzw. in Umfangsrichtung um eine Mittelachse X des Kabels 1 gedreht. Entsprechend sind auch die Adern 10 innerhalb des Kabelmantels 11 tordiert bzw. verdreht, was anhand des Verlaufs der Spitze 13 in einfacherweise erkannt werden kann.

Abhängig von der Beschaffenheit des Kabels 1 und der Adern 10 kann dann das Kabel 1 bzw. die Adern 10 anhand des Verdrehindikators 12 in einen unverdrehten / nicht tordierten Verlauf gebracht oder das gesamte Kabel 1 ausgetauscht werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Kabel (1) mit haptisch ertastbarem Verdrehindikator (12),
wobei das Kabel (1) zumindest eine Ader (10) zur Signalübertragung und einen die zumindest eine Ader (10) umgebenden Kabelmantel (11) aufweist,
**dadurch gekennzeichnet, dass** das Kabel (1) genau einen haptisch ertastbaren Verdrehindikator (12) aufweist,
welcher sich entlang einer Längsrichtung (L) des Kabels (1) über eine im Wesentlichen gesamte Länge des Kabelmantels (11) erstreckt und
über die im Wesentlichen gesamte Länge des Kabelmantels (11) eine vorbestimmte Orientierung zu der zumindest einen Ader (10) aufweist.

2. Kabel nach Anspruch 1,
wobei der Verdrehindikator (12) ein über den Kabelmantel (11) hervorstehender Vorsprung oder eine nutartige Vertiefung in dem Kabelmantel (11) ist.

3. Kabel nach Anspruch 1,
wobei der Verdrehindikator (12) ein über den Kabelmantel (11) hervorstehender Vorsprung ist, in welchem keine Ader und insbesondere keine Ader (10) zur Signalübertragung angeordnet ist.

4. Kabel nach einem der vorhergehenden Ansprüche,
wobei der Verdrehindikator (12) und der Kabelmantel (11) einstückig und integral miteinander ausgebildet sind.

5. Kabel nach dem vorhergehenden Anspruch,
wobei der Verdrehindikator (12) und der Kabelmantel (11) in einem gemeinsamen Extrusionsprozess ausgebildet sind, in welchem die zumindest eine Ader (10) mit dem Kabelmantel (11) umspritzt wird.

6. Kabel nach einem der vorhergehenden Ansprüche,
wobei der Verdrehindikator (12) in einem Querschnitt des Kabels (1) an genau einer Seite des Kabelmantels (11) und in Umfangsrichtung (U) um den Kabelmantel (11) an einer vorbestimmten Position ausgebildet ist.

7. Kabel nach dem vorhergehenden Anspruch,
wobei der Verdrehindikator (12) an jedem Querschnitt des Kabels (1) in Umfangsrichtung (U) um den Kabelmantel (11) an genau derselben Position ausgebildet ist.

8. Kabel nach einem der vorhergehenden Ansprüche,
wobei der Verdrehindikator (12) eine sich von dem Kabelmantel (11) unterscheidende Farbe aufweist, sodass der haptisch ertastbare Verdrehindikator (12) optisch erfassbar ist.

9. Kabel nach einem der vorhergehenden Ansprüche,
wobei die Ader (10) eine elektrische oder optische Signale leitende Ader (10) ist.

10. Kabel nach einem der vorhergehenden Ansprüche,
wobei das Kabel (1) ein Rundkabel oder ein Flachkabel ist.

11. Kabel nach einem der vorhergehenden Ansprüche,
wobei in oder an dem Verdrehindikator (12) und insbesondere über die im Wesentlichen gesamte Länge des Kabelmantels (11) ein kraftsensitives und insbesondere mechanophores Element angeordnet ist, welches ausgebildet ist, seine optische Erscheinung oder seine physikalischen Eigenschaften bei Wirken einer zu der Längsrichtung (L) orthogonalen und eine Grenzkraft übersteigende Querkraft und/oder Torsionskraft zu ändern.

12. Kabel nach einem der vorhergehenden Ansprüche,
wobei die zumindest eine Ader (10) einen runden Querschnitt aufweist,
oder wobei die zumindest eine Ader (10) einen flachen und insbesondere rechteckigen Querschnitt aufweist,
oder wobei eine Vielzahl von Adern (10) vorgesehen sind, welche einen flachen und insbesondere rechteckigen Querschnitt aufweisen und welche im Querschnitt des Kabels (1) aufeinander gestapelt sind.

13. Kabel nach einem der vorhergehenden Ansprüche,
wobei ein Endabschnitt des Kabels in Längsrichtung des Kabels einen Kodierabschnitt mit dem Verdrehindikator als Kodierelement für ein Kabelabschlusselement bildet und
wobei das Kabel durch den Verdrehindikator ausgebildet ist, nur in einer vorbestimmten Stellung mit dem Kabelabschlusselement fügbar zu sein.

14. Verfahren zur torsionsfreien Verlegen eines Kabels (1) gemäß einem der vorhergehenden Ansprüche entlang eines vorbestimmten Kabelpfades,
wobei das Kabel (1) entlang des vorbestimmten Kabelpfades angeordnet und während des Anordnens mit dem Verdrehindikator (12) in einer vorbestimmten Orientierung gehalten wird,
wobei das Kabel (1) nach dem Anordnen entlang des vorbestimmten Kabelpfades durch optisches und/oder haptisches Erfassen des Verdrehindikators (12) auf eine unzulässige Verdrehung des Kabels (1) in Umfangsrichtung (U) geprüft wird.
